(19) Europäisches Patentamt
European Patent Office
Office européen des brevets

(11) EP 3 592 573 B1

(12) # FASCICULE DE BREVET EUROPEEN

(45) Date de publication et mention de la délivrance du brevet:
**30.06.2021 Bulletin 2021/26**

(21) Numéro de dépôt: **18714822.6**

(22) Date de dépôt: **08.03.2018**

(51) Int Cl.:
***B60C 1/00*** *(2006.01)* ***C08K 3/04*** *(2006.01)*
***C08K 3/36*** *(2006.01)* ***C08K 5/103*** *(2006.01)*
***C08K 5/14*** *(2006.01)* *C08L 23/08* *(2006.01)*

(86) Numéro de dépôt international:
**PCT/FR2018/050539**

(87) Numéro de publication internationale:
**WO 2018/162855 (13.09.2018 Gazette 2018/37)**

(54) **PNEUMATIQUE MUNI D'UNE COMPOSITION COMPRENANT UN ELASTOMERE RICHE EN ETHYLENE, UN PEROXYDE ET UN DERIVE D'ACRYLATE POLYFONCTIONNEL**

REIFEN MIT EINER ZUSAMMENSETZUNG MIT EINEM ETHYLENREICHEN ELASTOMER, EINEM PEROXID UND EINEM MULTIFUNKTIONALEN ACRYLATDERIVAT

TYRE HAVING A COMPOSITION COMPRISING AN ETHYLENE-RICH ELASTOMER, A PEROXIDE AND A POLYFUNCTIONAL ACRYLATE DERIVATIVE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.03.2017 FR 1751893**

(43) Date de publication de la demande:
**15.01.2020 Bulletin 2020/03**

(73) Titulaire: **COMPAGNIE GENERALE DES ETABLISSEMENTS MICHELIN**
**63000 Clermont-Ferrand (FR)**

(72) Inventeurs:
- **GORNARD, Benjamin**
  **63040 Clermont-Ferrand Cedex 9 (FR)**
- **VASSEUR, Didier**
  **63100 Clermont-Ferrand (FR)**
- **PIBRE, Guillaume**
  **63040 Clermont-Ferrand Cedex 9 (FR)**

(74) Mandataire: **Wroblewski, Nicolas Paul André**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A1- 1 552 965** **EP-A1- 2 676 994**
**WO-A1-2016/102483** **FR-A1- 3 030 543**

- **DATABASE WPI Week 201529 Thomson Scientific, London, GB; AN 2015-18826D XP002775661, & CN 104 311 983 A (UNIV HEBEI SCI & TECHNOLOGY) 28 janvier 2015 (2015-01-28)**
- **SEREN TURKER: "The Modification of Montmorillonite Clay with Benzethonium Chloride and Determination of Its Application Areas (Master Thesis", , 31 August 2016 (2016-08-31), Retrieved from the Internet: URL:https://tez.yok.gov.tr/UlusalTezMerkez i**
- **MARYAN, A. et al.: "Antibacterial Properties of Clay Layers Silicate: A Special Study of Montmorillonite on Cotton Fiber", Asian Journal of Chemistry, vol. 25, no. 5 2013, pages 2889-2892, XP055619232, Retrieved from the Internet: URL:http://dx.doi.org/10.14233/ajchem.2013 .14 229**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 592 573 B1

Printed by Jouve, 75001 PARIS (FR)

## Description

L'invention est relative aux pneumatiques et plus particulièrement à ceux dont la composition de la bande de roulement ou celle d'une couche interne comprend un acrylate polyfonctionnel et un peroxyde.

Les couches de pneumatiques telles que la bande de roulement ou les couches internes doivent obéir à un grand nombre d'exigences techniques, souvent antinomiques, parmi lesquelles une faible résistance au roulement, une résistance élevée à l'usure, un bon comportement routier, ainsi qu'un bon niveau de cohésion du matériau.

Les concepteurs de pneumatiques sont constamment à la recherche de solution permettant de faire évoluer le compromis de propriétés existant en améliorant au moins une propriété du pneumatique, sans pour autant pénaliser les autres.

Pour améliorer la résistance à l'usure, on le sait, une certaine rigidité de la bande de roulement est souhaitable, cette rigidification de la bande de roulement pouvant être obtenue par exemple en augmentant le taux de charge renforçante ou en incorporant certaines résines renforçantes dans les compositions de caoutchouc constitutives de ces bandes de roulement. Malheureusement, l'expérience montre qu'une telle rigidification de la bande de roulement peut diminuer de manière connue, les propriétés de résistance au roulement, en s'accompagnant d'une augmentation importante des pertes hystérétiques de la composition de caoutchouc. L'amélioration de la performance de rigidité en gardant une faible résistance au roulement est de ce fait un problème à résoudre pour les concepteurs de pneumatique.

Du point de vue de la résistance au roulement, ce compromis de propriétés a pu être amélioré grâce à l'emploi de nouveaux mélanges possédant de bonnes propriétés mécaniques et une hystérèse aussi faible que possible afin de pouvoir les mettre en oeuvre sous forme de compositions de caoutchouc utilisables pour la fabrication de divers produits semi-finis entrant dans la composition de pneumatique. Par exemple, les documents WO 2016/102480 et WO 2016/102483 propose d'utiliser un dérivé d'acrylate polyfonctionnel et un peroxyde dans des compostions à base d'élastomère diénique.

Ainsi, les manufacturiers cherchent toujours des solutions pour améliorer d'avantage à la fois la résistance à l'usure et la résistance au roulement.

C'est dans ce cadre que la Demanderesse a découvert de façon surprenante que la résistance à l'usure pouvait être très nettement améliorée et l'hystérèse pouvait être également diminuée dans des compositions de caoutchouc pour pneumatique, avec un taux de charge renforçante réduit, grâce à l'utilisation combinée, d'une matrice élastomérique à base d'un copolymère comprenant de 50 à 95% en moles d'unité éthylène et des unités diéniques conjuguées, et d'un système de réticulation à base d'un acrylate polyfonctionnel et un peroxyde, à condition d'adopter un rapport adapté entre le taux de peroxyde et le taux d'acrylate polyfonctionnel.

Par ailleurs, cette solution présente de nombreux autres avantages par rapport aux compositions de l'art antérieur et notamment une amélioration de la poussée en dérive et donc du comportement routier, ainsi qu'une amélioration de la cohésion du matériau.

Ainsi, la présente invention a notamment pour objet un pneumatique comprenant une composition de caoutchouc à base d'au moins :

- une matrice élastomérique comprenant majoritairement un copolymère statistique comprenant des unités éthylène et des unités diéniques conjuguées, la fraction molaire des unités éthylène dans le copolymère étant compris dans un domaine allant de 50% à 95%,
- un peroxyde, et
- un acrylate polyfonctionnel de formule (I)

$$[X]_p\,A \qquad \text{(I)}$$

dans laquelle :

◦ A représente un atome de carbone ou un groupement hydrocarboné en $C_1$-$C_{13}$, linéaire, ramifié ou cyclique,
◦ A comprenant p valences libres, p ayant une valeur allant de 2 à 4,
◦ [X]p correspond à un radical de formule (II) :

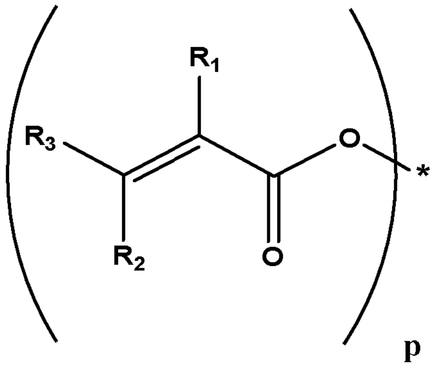

(II)

dans laquelle,

- $R_1$, $R_2$ et $R_3$ représentent indépendamment un atome d'hydrogène ou un groupe hydrocarboné en $C_1$-$C_8$ choisi dans le groupe constitué par les groupes alkyles linéaires, ramifiés ou cycliques, les groupes alkylaryles, les groupes aryles et les aralkyles, et éventuellement interrompus par un ou plusieurs hétéroatomes, $R_2$ et $R_3$ pouvant former ensemble un cycle non aromatique,
- (*) représente le point d'attachement du radical de formule (II) à A,

◦ étant entendu que les 2 à 4 radicaux X sont identiques ou différents, de préférence un acrylate polyfonctionnel de formule (Ia) ou (Ib) :

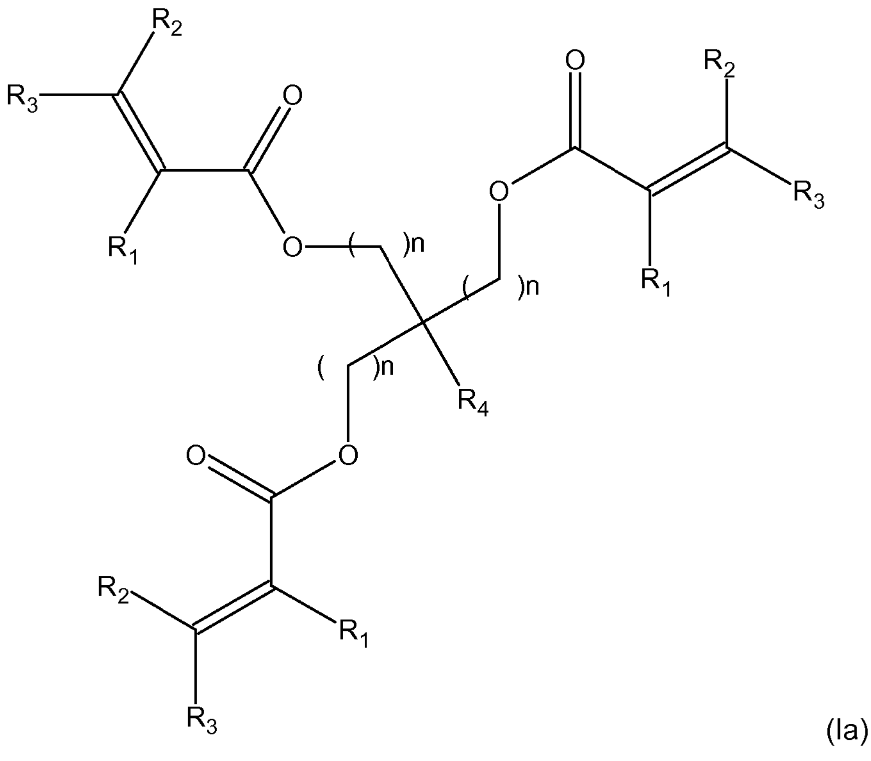

(Ia)

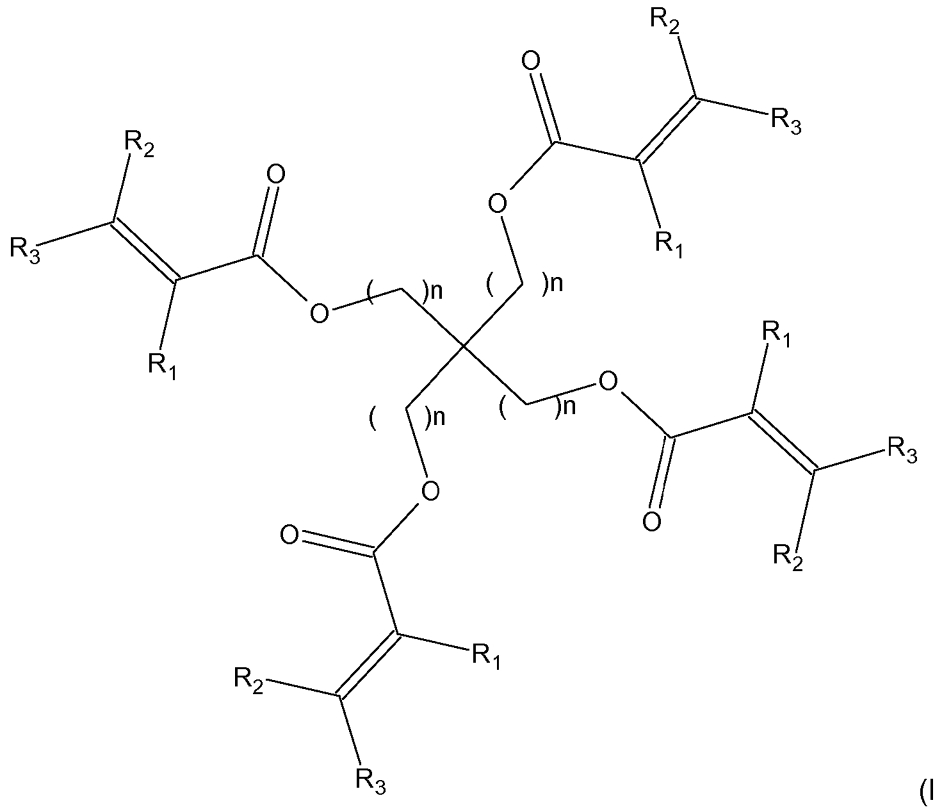

(Ib)

dans laquelle $R_1$, $R_2$ et $R_3$ représentent indépendamment un atome d'hydrogène ou un groupe hydrocarboné en $C_1$-$C_7$ choisi dans le groupe constitué par les alkyles linéaires, ramifiés ou cycliques, les groupes aralkyles, les groupes alkylaryles et les groupes aryles, et éventuellement interrompus par un ou plusieurs hétéroatomes, $R_2$ et $R_3$ pouvant former ensemble un cycle non aromatique, n représente un nombre entier de valeur 1, 2 ou 3, et dans le cas d'un acrylate polyfonctionnel de formule (Ia), $R_4$ représente un radical choisi dans le groupe constitué par un atome d'hydrogène, un groupement méthyle, un groupement éthyle, un groupement propyle ou un groupement isopropyle,

les taux d'acrylate polyfonctionnel et de peroxyde étant tels que le rapport du taux de peroxyde sur le taux d'acrylate polyfonctionnel est supérieur ou égal à 0,08 ;

ladite composition comprenant de 5 à moins de 65 pce de charge renforçante ; le rapport du taux de charge sur le taux de dérivé d'acrylate polyfonctionnel étant supérieur ou égal à 1,25.

## I- DÉFINITIONS

Par l'expression "partie en poids pour cent parties en poids d'élastomère" (ou pce), il faut entendre au sens de la présente invention, la partie, en masse pour cent parties en masse d'élastomère ou de caoutchouc.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".

Dans la présente, par l'expression composition "à base de", on entend une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation. A titre d'exemple, une composition à base d'une matrice élastomérique et de soufre comprend la matrice élastomérique et le soufre avant cuisson, alors qu'après cuisson le soufre n'est plus détectable car ce dernier a réagi avec la matrice élastomérique en formant des ponts soufrés (polysulfures, disulfures, mono-sulfure).

Lorsqu'on fait référence à un composé "majoritaire", on entend au sens de la présente invention, que ce

composé est majoritaire parmi les composés du même type dans la composition, c'est-à-dire que c'est celui qui représente la plus grande quantité en masse parmi les composés du même type, par exemple plus de 50%, 60%, 70%, 80%, 90%, voire 100% en poids par rapport au poids total du type de composé. Ainsi, par exemple, une charge renforçante majoritaire est la charge renforçante représentant la plus grande masse par rapport à la masse totale des charges renforçantes dans la composition. Au contraire, un composé "minoritaire" est un composé qui ne représente pas la fraction massique la plus grande parmi les composés du même type.

Dans le cadre de l'invention, les produits carbonés mentionnés dans la description, peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

## II- DESCRIPTION DE L'INVENTION

### 11-1 Matrice élastomérique

La composition du pneumatique selon l'invention a comme caractéristique essentielle de comprendre une matrice élastomérique comprenant majoritairement un copolymère statistique comprenant des unités éthylène et des unités diéniques conjuguées (également appelé dans la présente « le copolymère »), la fraction molaire des unités éthylène dans le copolymère étant compris dans un domaine allant de 50% à 95%.

Selon l'invention, les unités diéniques conjuguées sont de préférence choisies dans le groupe constitué par les unités butadiènes, les unités isoprènes et les mélanges de ces unités diéniques conjuguées. De préférence encore, les unités diéniques conjuguées sont majoritairement, voire préférentiellement exclusivement, des unités butadiène.

Avantageusement, la microstructure du copolymère est homogène. Un copolymère est de microstructure homogène lorsque pour chacune de ces unités, à chaque instant de polymérisation, les concentrations dans la chaîne sont identiques ou quasi-identiques. Ainsi, pour chacune de ces unités, à un instant donné, la concentration est identique ou quasi-identique à sa concentration à l'instant juste avant et après, et ainsi à tout instant de la polymérisation. Dans l'expression « la concentration est identique ou quasi-identique à », par « quasi-identique », on entend, au sens de la présente invention, une variation inférieure à 2% molaire.

En particulier, dans le copolymère statistique comprenant des unités éthylène et des unités diéniques conjuguées la concentration molaire en chacune de ces unités est constante tout le long de la chaîne du copolymère. Ainsi, pour un nombre représentatif d'unités successives définissant un segment, présent en début, milieu, fin ou en tout autre endroit de la chaîne du copolymère, la concentration en unités éthylène et unités diéniques conjuguées est identique ou quasi-identique dans chaque segment. Un enchaînement de 10 unités peut-être un nombre représentatif.

Avantageusement, la concentration en unités éthylène et en unités diéniques conjuguées (de préférence en unités butadiénique) est identique ou quasi-identique tout le long de la chaîne du copolymère. La concentration en chacune des unités va pouvoir être déterminée à l'avance en fonction de la nature du système catalytique choisi et des conditions opératoires (concentrations et pression monomères notamment).

De manière avantageuse, la fraction molaire des unités éthylène dans le copolymère est comprise dans un domaine allant de 50% à 95%, de préférence de 65% à 85%, de préférence de 65% à 80%.

La fraction molaire d'unités diéniques conjuguées (de préférence d'unité butadiène) dans le copolymère est inférieure ou égale à 50%. De préférence, elle est comprise dans un domaine allant de 10% à 50%, de préférence de 15% à 35%, de préférence de 20% à 35%.

Selon l'invention, le copolymère statistique comprenant des unités éthylène et des unités diéniques conjuguées peut comprendre des unités *trans*-1,2-cyclohexane. Lorsque le copolymère comprend des unités *trans*-1,2-cyclohexane, la fraction molaire d'unités *trans*-1,2-cyclohexane dans le copolymère est de préférence comprise entre 0% et 25%, de préférence de 1% à 10%, de préférence encore de 1% à 5%.

Selon l'invention, le copolymère statistique comprenant des unités éthylène et des unités diéniques conjuguées peut comprendre des unités vinylaromatiques. A titre d'unité vinylaromatique convient par exemple le styrène, l'ortho-, méta-, paraméthylstyrène, le mélange commercial "vinyle-toluène", le paratertiobutylstyrène, les méthoxystyrènes, les chlorostyrènes, le vinylmésitylène, le divinylbenzène, le vinylnaphtalène. Avantageusement, le copolymère statistique comprenant des unités éthylène et des unités diéniques conjuguées ne comprend pas d'unité vinylaromatique.

Avantageusement, le copolymère statistique comprenant des unités éthylène et des unités diéniques conjuguées présente une masse Mn allant de 20 000 g/mol à 1 500 000 g/mol, plus préférentiellement allant de 60 000 g/mol à 250 000 g/mol.

Avantageusement également, le copolymère statistique comprenant des unités éthylène et des unités diéniques conjuguées présente un indice de polymolécularité qui est inférieur à 2,5. De préférence, l'indice Ip desdits copolymères est inférieur ou égal à 2 et, à titre encore plus préférentiel, cet indice Ip est inférieur ou égal à 1,9. A l'instar des masses moléculaires Mn, les indices de polymolécularité Ip ont été déterminés dans la présente demande par chromatographie

d'exclusion stérique.

Avantageusement également, le copolymère statistique comprenant des unités éthylène et des unités diéniques conjuguées présente une température de transition vitreuse Tg qui est inférieure à 25°C. Plus précisément, ces copolymères peuvent par exemple présenter une température Tg comprise entre -45 °C et -20 °C.

Avantageusement également, lorsque le copolymère statistique comprenant des unités éthylène et des unités diéniques conjuguées comprend en outre des unités trans-1,2-cyclohexane, le copolymère présente une cristallinité inférieure à 25%, plus avantageusement inférieure à 15%, encore plus avantageusement inférieure à 10%.

Les techniques utilisées pour la détermination des fractions molaires, des masses moléculaires, des températures de transitions vitreuses et de la cristallinité sont décrites ci-après dans les exemples.

Les copolymères statistiques comprenant des unités éthylène et des unités diéniques conjuguées utilisables dans le cadre de la présente invention peuvent être obtenu selon des méthodes de synthèse connues, notamment celles décrites dans les documents EP 1 092 731, EP 1 554 321, EP 1 656 400, EP 1 829 901, EP 1 954 705, EP 1 957 506, ou dans les demandes de brevet français 15/62573 et 15/62575 déposées le 17 décembre 2015 auprès de l'Institut Nationale de la Propriété Industrielle (INPI) en France.

Selon l'invention, de manière avantageuse, la matrice élastomérique comprend uniquement, à titre d'élastomère, le copolymère statistique comprenant des unités éthylène et des unités diéniques conjuguées.

Alternativement, la matrice élastomérique peut comprendre en outre un élastomère diénique différent du copolymère statistique comprenant des unités éthylène et des unités diéniques conjuguées (également appelé dans la présente « l'autre élastomère »). L'autre élastomère, lorsqu'il est présent, est minoritaire, c'est à dire qu'il représente moins 50%, 40%, 30%, 20%, voire moins de 10% en poids de la matrice élastomérique.

L'autre élastomère de la matrice élastomérique du pneumatique selon l'invention est choisi préférentiellement dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR), les copolymères de butadiène-acrylonitrile (NBR), les copolymères de butadiène-styrène-acrylonitrile (NSBR) ou un mélange de deux ou plus de ces composés.

<u>II-2 Acrylate polyfonctionnel</u>

Le pneumatique selon l'invention comprend une composition qui comprend un acrylate polyfonctionnel de formule (I)

$$[X]_p\,A \qquad (I)$$

dans laquelle :

- A représente un atome de carbone ou un groupement hydrocarboné en $C_1$-$C_{13}$, linéaire, ramifié ou cyclique,
- A comprenant p valences libres, p ayant une valeur allant de 2 à 4,
- [X]p correspond à un radical de formule (II) :

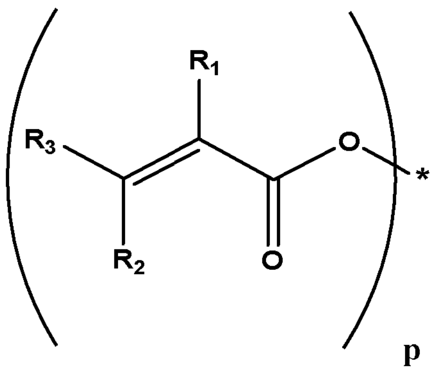

(II)

dans laquelle,

- $R_1$, $R_2$ et $R_3$ représentent indépendamment un atome d'hydrogène ou un groupe hydrocarboné en $C_1$-$C_8$

choisi dans le groupe constitué par les groupes alkyles linéaires, ramifiés ou cycliques, les groupes alkylaryles, les groupes aryles et les aralkyles, et éventuellement interrompus par un ou plusieurs hétéroatomes, $R_2$ et $R_3$ pouvant former ensemble un cycle non aromatique,

- (*) représente le point d'attachement du radical de formule (II) à A,

◦ étant entendu que les 2 à 4 radicaux X sont identiques ou différents.

Lorsque A représente un groupement hydrocarboné en $C_1$-$C_{13}$, il peut s'agir par exemple d'un groupement hydrocarboné en $C_1$-$C_{10}$, de préférence en $C_1$-$C_8$, de préférence en $C_1$-$C_5$.
Lorsque A représente un groupement hydrocarboné cyclique, il peut s'agir un groupement hydrocarboné cyclique non-aromatique ou aromatique, de préférence non-aromatique.
Par exemple, le groupement hydrocarboné en $C_1$-$C_{13}$ est choisi dans le groupe constitué par les radicaux suivants :

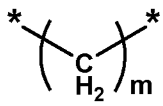
,
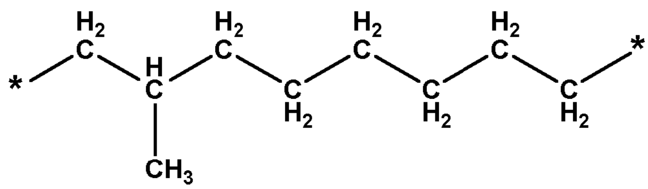
,

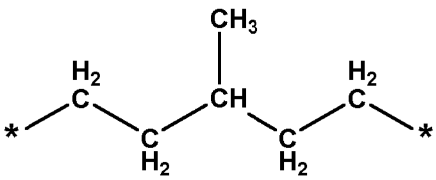
,
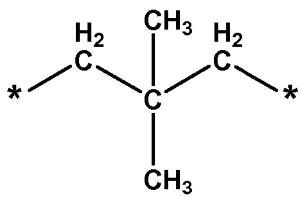
,
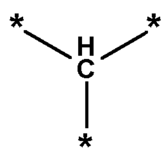
,

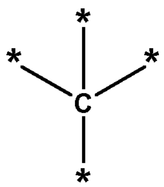
,
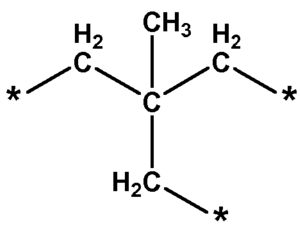
,
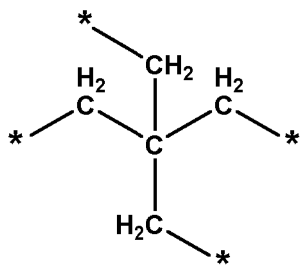

et

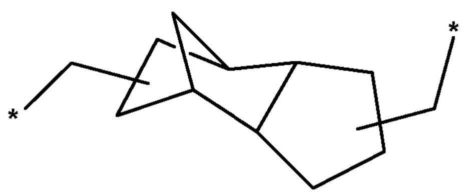

dans lesquels, m est un nombre entier allant de 1 à 13, de préférence de 6 à 10, et (*) représente le point d'attachement de A au radical de formule (II).
Le nombre de valence p dépend de la nature du radical A. Selon l'invention, p peut valoir 2, 3 ou 4. Par exemple, p peut valoir 2 ou 3, par exemple 2.
Avantageusement, l'acrylate polyfonctionnel de formule (I) est un acrylate fonctionnel de formule (Ia) ou (Ib) :

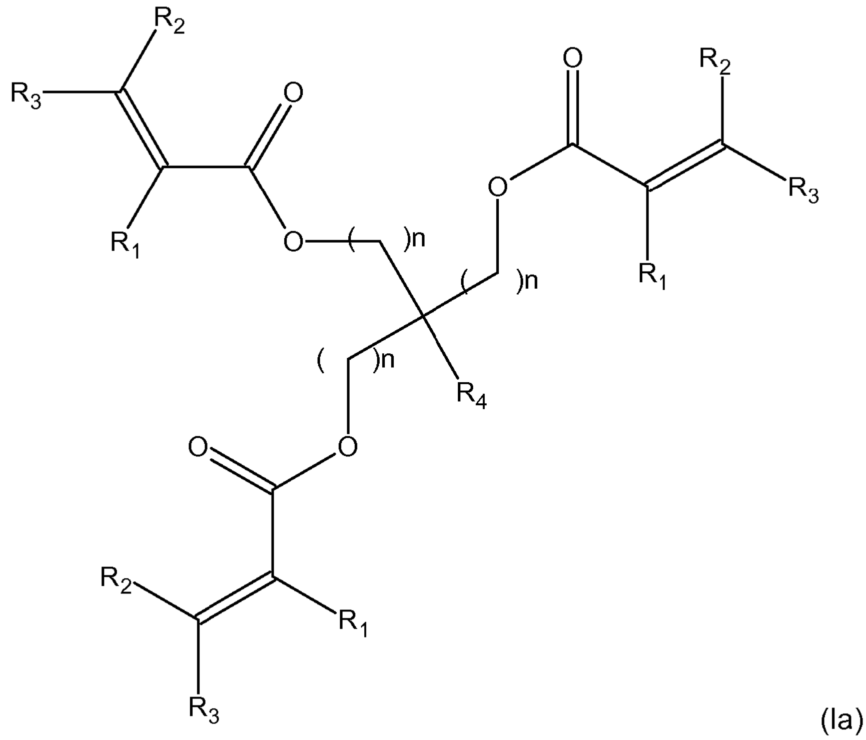

(Ia)

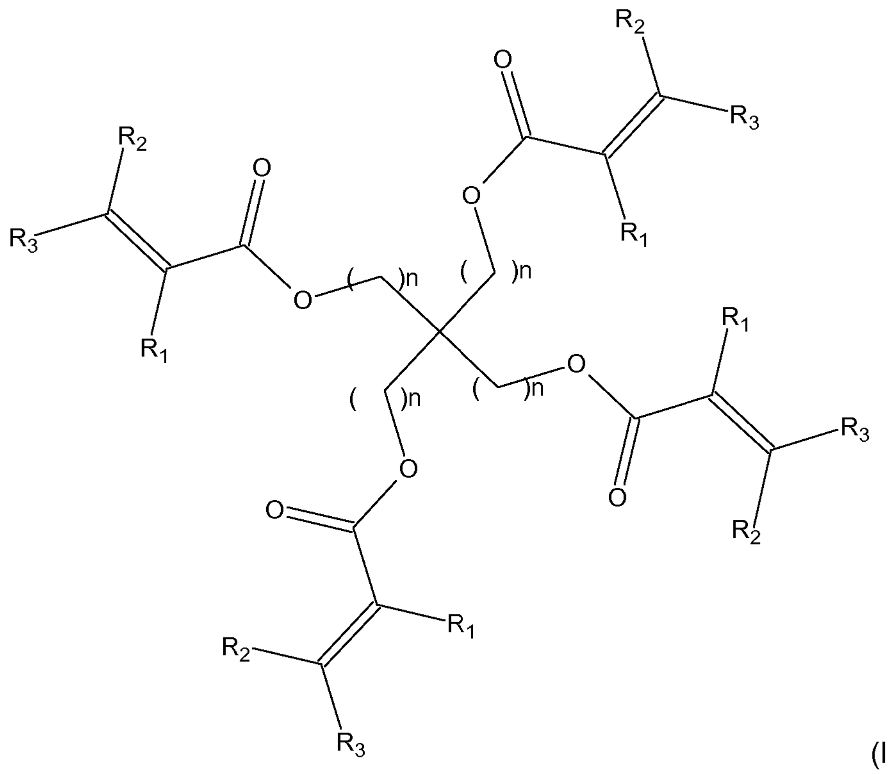

(Ib)

dans laquelle $R_1$, $R_2$ et $R_3$ représentent indépendamment un atome d'hydrogène ou un groupe hydrocarboné en $C_1$-$C_7$ choisi dans le groupe constitué par les alkyles linéaires, ramifiés ou cycliques, les groupes aralkyles, les groupes alkylaryles et les groupes aryles, et éventuellement interrompus par un ou plusieurs hétéroatomes, $R_2$ et $R_3$ pouvant former ensemble un cycle non aromatique, n représente un nombre entier de valeur 1, 2 ou 3, et dans le cas d'un acrylate polyfonctionnel de formule (Ia), $R_4$ représente un radical choisi dans le groupe constitué par un atome d'hydrogène, un groupement méthyle, un groupement éthyle, un groupement propyle ou un groupement isopropyle.

Sauf indication contraire, l'acrylate polyfonctionnel de formule (Ia) ou (Ib) est également appelé dans la présente

« acrylate polyfonctionnel ».

Par groupe alkyle cyclique, on entend un groupe alkyle comprenant un ou plusieurs cycles.

Par groupe ou chaîne hydrocarboné(e) interrompu(e) par un ou plusieurs hétéroatomes, on entend un groupe ou chaîne comprenant un ou plusieurs hétéroatomes, chaque hétéroatome étant compris entre deux atomes de carbone dudit groupe ou de ladite chaîne, ou entre un atome de carbone dudit groupe ou de ladite chaîne et un autre hétéroatome dudit groupe ou de ladite chaîne ou entre deux autres hétéroatomes dudit groupe ou de ladite chaîne. Le ou les hétéroatomes peuvent être un atome d'azote, de soufre ou d'oxygène.

Préférentiellement dans les formules (I), (Ia) et (Ib) ci-dessus, $R_1$, $R_2$ et $R_3$ représentent indépendamment un atome d'hydrogène, un groupe méthyle ou un groupe éthyle. Plus préférentiellement, $R_2$ et $R_3$ représentent chacun un atome d'hydrogène et selon une alternative également très préférentielle $R_1$ représente un groupe méthyle. Alternativement, $R_1$, $R_2$ et $R_3$ peuvent représenter chacun un atome d'hydrogène.

Préférentiellement, n représente le nombre entier 1 dans les formules (Ia) et (Ib) ci-dessus.

Préférentiellement, dans le cas d'un acrylate polyfonctionnel de formule (Ia), $R_4$ représente un groupement éthyle.

Dans la composition de pneumatique selon l'invention, la quantité de acrylate polyfonctionnel est de préférence comprise dans un domaine allant de 5 à 40 pce, de préférence de 5 à 30 pce, de préférence de 5 à 20 pce, de préférence de 5 à 10 pce.

Au-delà d'un taux de 40 pce la dispersion est moins bonne et les propriétés de la composition peuvent se dégrader tandis qu'en deçà d'un taux de 5 pce, l'effet de l'acrylate polyfonctionnel est moins notable sur la rigidification et le renforcement.

A titre d'exemple, on trouve dans le commerce des acrylates polyfonctionnels tels que ceux de la société SARTOMER : le triméthylolpropane triméthacrylate (TMPTMA) « SR351 », le 1,6-hexanbediol diacrylate (HDDA) « SR238 », le 3-méthyl-1,5-pentanediol diacrylate (MPDA) « SR341 », le 1,10-decanediol diacrylate (DDDA) « SR595 », le tricyclodecanedimethanol diacrylate (TCDDMDA) « SR833 », le pentaerythritol tetraacrylate (PETTA) « SR295 », le trimethylolpropane triacrylate (TMPTA) « SR351 », l'ethlyene glycol diméthacrylate (EGDMA) « SR206 », le 1,4-butanediol diméthacrylate (BDDMA) « SR214 », le 1,6-hexanediol diméthacrylate (HDDMA) « SR239 », le 1,10-decanediol diméthacrylate (DDDMA) « SR261 », le 1,3-butylène glycol diméthacrylate (BGDMA) « SR297 », le tricyclodecanedimethanol diméthacrylate (TCDDMDMA) « SR834 ».

II-3 Peroxyde

En plus de la matrice élastomérique et de l'acrylate polyfonctionnel précédemment décrits, la composition de caoutchouc du pneumatique de l'invention utilise un peroxyde, qui peut être tout peroxyde connu de l'homme de l'art.

Parmi les peroxydes, bien connus de l'homme de l'art, il est préférable d'utiliser pour l'invention un peroxyde choisi dans la famille des peroxydes organiques. De préférence, le peroxyde organique est choisis dans le groupe constitué par le peroxyde de dicumyle, les peroxydes d'aryle ou de diaryle, le peroxyde de diacétyle, le peroxyde de benzoyle, le peroxyde de dibenzoyle, le peroxyde de ditertbutyle, le peroxyde de tertbutylcumyle, le 2,5-bis (tertbutylperoxy)-2,5-diméthylhexane, le n-butyl-4,4'-di(tert-butylperoxy) valérate, le OO-(t-butyl)-O-(2-éthylhexyl) monoperoxycarbonate, le tertio-butyl peroxyisopropylcarbonate, le tertio-butyl peroxybenzoate, le tert-butyl peroxy-3,5,5-triméthylhexanoate, le 1,3(4)-bis(tert-butylperoxyisopropyl)benzene et leurs mélanges. Alternativement, le peroxyde peut être un peroxyde organique choisi dans le groupe comprenant ou constitué par le peroxyde de dicumyl, les peroxydes d'aryl ou de diaryl, le peroxyde de diacetyl, le peroxyde de benzoyle, le peroxyde de dibenzoyle, le peroxyde de ditertbutyl, le peroxyde de tertbutylcumyl, le 2,5-bis (tertbutylperoxy)-2,5-dimethylhexane, et leurs mélanges.

Il existe dans le commerce divers produits conditionnés, connus sous leurs marques de fabrique; on peut citer:-le « Dicup » de la société Hercules Powder Co., le « Perkadox Y12 » de la Societe Noury van der Lande, le « Peroximon F40 » de la société Montecatini Edison S.p.A., le « Trigonox » de la Societe Noury van der Lande, le « Varox » de la société R.T.Vanderbilt Co., ou encore le « Luperko », de la société Wallace & Tiernan, Inc.

Préférentiellement, la quantité de peroxyde à utiliser pour les besoins de l'invention est inférieure ou égale à 3 pce. De préférence, la quantité de peroxyde dans la composition est comprise dans un domaine allant de 0,1 à 3 pce. En effet, en dessous d'une quantité de 0,1 pce, l'effet du peroxyde n'est pas notable tandis qu'au-delà de 3 pce, les propriétés d'allongement rupture et donc de résistance de la composition sont diminuées. Plus préférentiellement, la quantité de peroxyde dans la composition est comprise dans un domaine allant de 0,2 à 2,5 pce, de préférence de 0,25 à 1,8 pce.

Quelles que soient les quantités d'acrylate polyfonctionnel et de peroxyde, il est important pour l'invention que le rapport du taux de peroxyde sur le taux d'acrylate polyfonctionnel soit supérieur ou égal à 0,08. En dessous d'un tel taux la synergie entre l'acrylate polyfonctionnel et le peroxyde n'est pas aussi performante en termes d'effet sur la rhéométrie et sur l'allongement rupture. De préférence, le rapport du taux de peroxyde sur le taux d'acrylate polyfonctionnel est strictement supérieur à 0,09, de préférence il est compris entre 0,09 et 0,30 ; de préférence entre 0,09 et

0,20 et plus préférentiellement entre 0,09 et 0,15

II-4 Charge renforçante

La composition du pneumatique selon l'invention comprend de 5 à moins de 65 pce de charge renforçante connue pour ses capacités à renforcer une composition de caoutchouc utilisable pour la fabrication de pneumatiques.
L'état physique sous lequel se présente la charge renforçante est indifférent, que ce soit sous forme de poudre, de microperles, de granulés, de billes ou toute autre forme densifiée appropriée.
La charge renforçante de la composition de caoutchouc du pneumatique selon l'invention peut comprendre du noir de carbone, une charge organique autre que le noir de carbone, une charge inorganique ou le mélange d'au moins deux de ces charges. De préférence, la charge renforçante comprend un noir de carbone, une charge inorganique renforçante ou un de leurs mélanges. De préférence, la charge inorganique renforçante est une silice. Plus préférentiellement encore la charge renforçante comprend majoritairement du noir de carbone et minoritairement une charge inorganique. La charge renforçante peut comprendre par exemple de 50 à 100% en masse de noir de carbone, de préférence de 55 à 90% en masse, de préférence de 60 à 80% en masse. De manière particulièrement avantageuse, la charge renforçante comprend exclusivement du noir de carbone.
Une telle charge renforçante consiste typiquement en des particules dont la taille moyenne (en masse) est inférieure au micromètre, généralement inférieure à 500 nm, le plus souvent comprise entre 20 et 200 nm, en particulier et plus préférentiellement comprise entre 20 et 150 nm.
Selon l'invention, le taux de charge renforçante, de préférence la charge renforçante comprenant majoritairement du noir de carbone, peut être compris dans un domaine allant de 5 à 60 pce, de préférence de 10 à 55 pce, de préférence de 15 à 50 pce, de préférence 20 à 45 pce, de préférence de 35 à 40 pce.
Quelles que soient les quantités d'acrylate polyfonctionnel et de charge, il est important pour l'invention que le rapport du taux de charge sur le taux d'acrylate polyfonctionnel soit supérieur ou égal à 1,25. De préférence, le rapport du taux de charge sur le taux d'acrylate polyfonctionnel est compris dans un domaine allant de 2 à 9, de préférence de 2,5 à 7, de préférence encore de 3 à 5.
Les noirs utilisables dans le cadre de la présente invention peuvent être tout noir conventionnellement utilisé dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un masterbatch (voir par exemple demandes WO 97/36724 ou WO 99/16600). La surface spécifique BET des noirs de carbone est mesurée selon la norme D6556-10 [méthode multipoints (au minimum 5 points) - gaz : azote - domaine de pression relative P/P0 : 0.1 à 0.3].
Comme exemples de charges organiques autres que des noirs de carbone, on peut citer les charges organiques de polyvinyle fonctionnalisé telles que décrites dans les demandes WO 2006/069792, WO 2006/069793, WO 2008/003434 et WO 2008/003435.
Par "charge inorganique renforçante", doit être entendu ici toute charge inorganique ou minérale, quelles que soient sa couleur et son origine (naturelle ou de synthèse), encore appelée charge "blanche", charge "claire" ou même charge "non noire" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface. En d'autres termes, sans agent de couplage, la charge inorganique ne permet pas de renforcer, ou pas suffisamment, la composition et n'est par conséquent pas comprise dans la définition de « charge inorganique renforçante ».
Comme charges inorganiques renforçantes conviennent notamment des charges minérales du type siliceux, préférentiellement la silice ($SiO_2$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$, notamment entre 60 et 300 $m^2/g$. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/016387.
Dans le présent exposé, en ce qui concerne la silice, la surface spécifique BET est déterminée de manière connue par adsorption de gaz à l'aide de la méthode de Brunauer-Emmett-Teller décrite dans "The Journal of the

American Chemical Society" Vol. 60, page 309, février 1938, plus précisément selon la norme française NF ISO 9277 de décembre 1996 (méthode volumétrique multipoints (5 points) - gaz: azote - dégazage: 1 heure à 160°C - domaine de pression relative *p/po :* 0.05 à 0.17). La surface spécifique CTAB est la surface externe déterminée selon la norme française NF T 45-007 de novembre 1987 (méthode B).

Conviennent également comme charges inorganiques renforçantes les charges minérales du type alumineuse, en particulier de l'alumine ($Al_2O_3$) ou des (oxyde)hydroxydes d'aluminium, ou encore des oxydes de titane renforçants, par exemple décrits dans US 6,610,261 et US 6,747,087.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-dessus.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

L'homme du métier peut trouver des exemples d'agent de couplage dans les documents suivants : WO 02/083782, WO 02/30939, WO 02/31041, WO 2007/061550, WO 2006/125532, WO 2006/125533, WO 2006/125534, US 6 849 754, WO 99/09036, WO 2006/023815, WO 2007/098080, WO 2010/072685 et WO 2008/055986.

La teneur en agent de couplage est avantageusement inférieure à 10 pce, étant entendu qu'il est en général souhaitable d'en utiliser le moins possible. Typiquement lorsque qu'une charge inorganique renforçante est présente, le taux d'agent de couplage représente de 0,5% à 15% en poids par rapport à la quantité de charge inorganique. Son taux est préférentiellement compris dans un domaine allant de 0,5 à 7,5 pce. Ce taux est aisément ajusté par l'homme du métier selon le taux de charge inorganique utilisé dans la composition.

La composition de caoutchouc du pneumatique selon l'invention peut également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes (notamment des alkyltriéthoxysilanes), des polyols, des polyéthers (par exemple des polyéthylèneglycols), des amines primaires, secondaires ou tertiaires (par exemple des trialcanol-amines), des POS hydroxylés ou hydrolysables, par exemple des $\alpha,\omega$-dihydroxy-polyorganosiloxanes (notamment des $\alpha,\omega$-dihydroxy-polydiméthylsiloxanes), des acides gras comme par exemple l'acide stéarique.

II-5 Système de vulcanisation

La composition du pneumatique selon l'invention ne nécessite pas de système de vulcanisation, ce qui est l'un de ses avantages puisque cela permet de simplifier la formule, et la préparation de la composition. Si cependant un système de vulcanisation est présent dans la composition, il l'est préférablement dans de faibles quantités.

Le système de vulcanisation proprement dit est habituellement à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre moléculaire (ou de manière équivalente les agents donneurs de soufre moléculaire), lorsqu'il est utilisé, l'est à un taux préférentiellement inférieur à 0,5 pce,

Ainsi, de manière très préférentielle, la composition ne contient pas de soufre moléculaire ou d'agent donneur de soufre en tant qu'agent de vulcanisation ou en contient moins de 0,5 pce, de préférence moins de 0,3 pce, de préférence encore moins de 0,1 pce. De préférence encore, la composition du pneumatique selon l'invention ne contient pas de soufre moléculaire ou d'agent donneur de soufre en tant qu'agent de vulcanisation.

Le système de vulcanisation de la composition selon l'invention peut également comprendre un ou plusieurs accélérateurs additionnels, par exemple les composés de la famille des thiurames, les dérivés dithiocarbamates de zinc, les sulfénamides, les guanidines ou les thiophosphates. On peut utiliser en particulier tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-tert-butyl-2-benzothiazyle sulfénamide (en abrégé "TBBS"), N-tert-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

Si un accélérateur est utilisé, il l'est à des taux tels que ceux pratiqués par l'homme du métier des compositions vulcanisées pour pneumatique. Néanmoins, la composition du pneumatique selon l'invention est préférentiellement dépourvue de tout accélérateur de vulcanisation.

### II-6 Autres additifs possibles

Les compositions de caoutchouc du pneumatique selon l'invention comportent optionnellement également tout ou partie des additifs usuels habituellement utilisés dans les compositions d'élastomères pour pneumatique, comme par exemple des pigments, des agents de protection tels que cires anti-ozone, anti-ozonants chimiques, anti-oxydants, des agents plastifiants tels que ceux proposés ci-après, des agents anti-fatigue, des résines renforçantes, des accepteurs (par exemple résine phénolique novolaque) ou des donneurs de méthylène (par exemple HMT ou H3M).

Selon un mode préférentiel, la composition du pneumatique de l'invention est dépourvue d'agent anti-oxydant.

Selon un mode préférentiel, la composition du pneumatique de l'invention est dépourvue d'agent plastifiant. De manière alternative et selon un mode de réalisation également préférentiel, la composition selon l'invention comporte en outre un agent plastifiant. De préférence cet agent plastifiant est une résine hydrocarbonée solide (ou résine plastifiante), une huile d'extension (ou huile plastifiante), ou un mélange des deux.

### II-7 Pneumatiques

La présente invention a également pour objet, un article de caoutchouc finis ou semi-finis, ainsi qu'un pneumatique, comprenant une composition conforme à la présente invention.

L'invention concerne particulièrement des pneumatiques destinés à équiper des véhicules à moteur de type tourisme, SUV ("Sport Utility Vehicles"), ou deux roues (notamment motos), ou avions, ou encore des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, et autres.

Il est possible de définir au sein du pneumatique trois types de zones :

- La zone radialement extérieure et en contact avec l'air ambiant, cette zone étant essentiellement constituée de la bande de roulement et du flanc externe du pneumatique. Un flanc externe est une couche élastomérique disposée à l'extérieur de l'armature de carcasse par rapport à la cavité interne du pneumatique, entre le sommet et le bourrelet de sorte à couvrir totalement ou partiellement la zone de l'armature de carcasse s'étendant du sommet au bourrelet.
- La zone radialement intérieure et en contact avec le gaz de gonflage, cette zone étant généralement constituée par la couche étanche aux gaz de gonflage, parfois appelée couche étanche intérieure ou gomme intérieure (« inner liner » en anglais).
- La zone interne du pneumatique, c'est-à-dire celle comprise entre les zones extérieure et intérieure. Cette zone inclut des couches ou nappes qui sont appelées ici couches internes du pneumatique. Ce sont par exemple des nappes carcasses, des sous-couches de bande de roulement, des nappes de ceintures de pneumatiques ou tout autre couche qui n'est pas en contact avec l'air ambiant ou le gaz de gonflage du pneumatique.

La composition définie dans la présente description est particulièrement bien adaptée aux couches internes et aux bandes de roulement de pneumatique.

Aussi, dans le pneumatique selon la présente invention la composition peut être présente dans la bande de roulement et/ou une couche interne du pneumatique. Selon l'invention, la couche interne peut être choisie dans le groupe constitué par les nappes carcasse, les nappes sommet, les bourrages-tringle, les pieds sommets, les pieds sommet, les couches de découplage, les gommes de bordure, la sous-couche de bande de roulement et les combinaisons de ces couches internes. De préférence, la couche interne est choisie dans le groupe constitué par les nappes carcasses, les nappes sommet, les bourrages-tringle, les pieds sommets, les couches de découplage et les combinaisons de ces couches internes.

L'invention concerne les pneumatiques et produits semi-finis pour pneumatiques précédemment décrits, les articles en caoutchouc, tant à l'état cru (c'est à dire, avant cuisson) qu'à l'état cuit (c'est à dire, après réticulation ou vulcanisation).

II-8 Préparation des compositions de caoutchouc

Les compositions sont fabriquées dans des mélangeurs appropriés, en utilisant deux phases de préparation successives bien connues de l'homme du métier: une première phase de travail ou malaxage thermo-mécanique (parfois qualifiée de phase "non-productive") à haute température, jusqu'à une température maximale comprise entre 110°C et 190°C, de préférence entre 130°C et 180°C, suivie d'une deuxième phase de travail mécanique (parfois qualifiée de phase "productive") à plus basse température, typiquement inférieure à 110°C, par exemple entre 60°C et 100°C, phase de finition au cours de laquelle est incorporé le système de réticulation et notamment le peroxyde des compositions selon l'invention; de telles phases ont été décrites par exemple dans les demandes EP-A-0501227, EP-A-0735088, EP-A-0810258, WO00/05300 ou WO00/05301.

La première phase (non-productive) est conduite préférentiellement en plusieurs étapes thermomécaniques. Au cours d'une première étape on introduit, dans un mélangeur approprié tel qu'un mélangeur interne usuel, les élastomères et les charges renforçantes (et éventuellement les agents de couplage et/ou d'autres ingrédients), à une température comprise entre 20°C et 100°C et, de préférence, entre 25°C et 100°C. Après quelques minutes, préférentiellement de 0,5 à 2 min et une montée de la température à 90°C à 100°C, les autres ingrédients (c'est-à-dire, ceux qui restent si tous n'ont pas été mis au départ) sont ajoutés en une fois ou par parties, à l'exception du système de réticulation et notamment du peroxyde durant un mélangeage allant de 20 secondes à quelques minutes. La durée totale du malaxage, dans cette phase non-productive, est de préférence comprise entre 2 et 10 minutes à une température inférieure ou égale à 180°C, et préférentiellement inférieure ou égale à 170°C.

Après refroidissement du mélange ainsi obtenu, on incorpore alors le système de réticulation et notamment le peroxyde, à basse température (typiquement inférieure à 100°C), généralement dans un mélangeur externe tel qu'un mélangeur à cylindres; le tout est alors mélangé (phase productive) pendant quelques minutes, par exemple entre 5 et 15 min.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé pour la fabrication de semi-finis afin d'obtenir des bandes de roulement ou des produits dits « couches internes » tels que nappe carcasse, nappes sommet (ou ceinture de pneumatique), bourrage tringle. Ces produits peuvent ensuite être utilisés pour la fabrication de pneumatiques, selon les techniques connues de l'homme du métier.

La cuisson est conduite de manière connue à une température généralement comprise entre 130°C et 200°C, sous pression, pendant un temps suffisant qui peut varier par exemple entre 5 et 90 min en fonction notamment de la température de cuisson, du système de vulcanisation adopté, de la cinétique de vulcanisation de la composition considérée ou encore de la taille du pneumatique.

**III- EXEMPLES**

III-1 Mesures et tests utilisés

*Propriétés dynamiques (après cuisson): Essai de traction*

Ces essais de traction permettent de déterminer les contraintes d'élasticité et les propriétés à la rupture. Sauf indication différente, ils sont effectués conformément à la norme française NF T 46-002 de septembre 1988. Un traitement des enregistrements de traction permet également de tracer la courbe de module en fonction de l'allongement. Le module utilisé ici étant le module sécant nominal (ou apparent) mesuré en première élongation, calculé en se ramenant à la section initiale de l'éprouvette. On mesure en première élongation les modules sécants nominaux (ou contraintes apparentes, en MPa) à 50%, 100% et 300% d'allongement notés respectivement M50, M100 et M300.

On mesure également les contraintes à la rupture (en MPa) et les allongements à la rupture (AR en %), à 23°C $\pm$ 2°C, selon la norme NF T 46-002. L'énergie rupture est égale au produit de l'allongement rupture par la contrainte rupture

Toutes ces mesures de traction sont effectuées dans les conditions normales de température (23$\pm$2°C) et d'hygrométrie (50$\pm$5% d'humidité relative), selon la norme française NF T 40-101 (décembre 1979).

Les propriétés dynamiques G*(10%) et tan($\delta$)max à 60°C sont mesurées sur un viscoanalyseur (Metravib VA4000), selon la norme ASTM D 5992-96. On enregistre la réponse d'un échantillon de composition réticulée (éprouvette cylindrique de 4 mm d'épaisseur et de 400 $mm^2$ de section), soumis à une sollicitation sinusoïdale en cisaillement simple alterné, à la fréquence de 10Hz, dans les conditions définies de température par exemple à 60°C selon la norme ASTM D 1349-99, ou selon les cas à une température différente. On effectue un balayage en amplitude de déformation de 0,1 à 50% (cycle aller), puis de 50% à 1% (cycle retour). Les résultats exploités sont le module complexe de cisaillement dynamique G* et le facteur de perte tan($\delta$). Pour le cycle retour, on indique la valeur maximale de tan($\delta$) observée, noté tan($\delta$)max, ainsi que le module complexe de cisaillement dynamique G*(10%) à 10% de déformation, à 60°C.

On rappelle que, de manière bien connue de l'homme du métier, la valeur de tan(δ)max à 60°C est représentative de l'hystérèse du matériau donc de la résistance au roulement : plus tan(δ)max à 60°C est faible, plus la résistance au roulement est réduite et donc améliorée.

*Résistance à l'usure*

On soumet les pneumatiques à un roulage réel sur route, sur un véhicule automobile déterminé, jusqu'à ce que l'usure due au roulage atteigne les témoins d'usure disposés dans les rainures de la bande de roulement. Le résultat est donné en base 100 : selon le nombre de kilomètres parcourus, on fixe une valeur à 100 pour le témoin. Une valeur supérieure à celle du témoin indique un résultat amélioré c'est-à-dire un kilométrage parcouru supérieur.

*Détermination des masses molaires : Analyse par Chromatographie d'Exclusion Stérique des copolymères*

a) Pour les copolymères solubles à température ambiante dans le tétrahydrofuranne (THF), on a déterminé les masses molaires par chromatographie d'exclusion stérique dans le THF. On a injecté les échantillons à l'aide d'un injecteur " Waters 717 " et d'une pompe " Waters 515 HPLC " à un débit de 1 $ml.min^{-1}$ dans une série de colonnes " Polymer Laboratories ". Cette série de colonnes, placée dans une enceinte thermostatée à 45°C, est composée de :

- 1 précolonne PL Gel 5 μm,
- 2 colonnes PL Gel 5 μm Mixte C,
- 1 colonne PL Gel 5 μm-500 Å.

On a réalisé la détection à l'aide d'un réfractomètre " Waters 410 ". On a déterminé les masses molaires par calibration universelle en utilisant des étalons de polystyrène certifiés par " Polymer Laboratories " et une double détection avec réfractomètre et couplage au viscosimètre.

Sans être une méthode absolue, la SEC permet d'appréhender la distribution des masses moléculaires d'un polymère. A partir de produits étalons commerciaux de type Polystyrène les différentes masses moyennes en nombre (Mn) et en poids (Mw) peuvent être déterminées et l'indice de polymolécularité calculé (Ip = Mw/Mn).

b) Pour les copolymères insolubles à température ambiante dans le tétrahydrofuranne, les masses molaires ont été déterminées dans le 1,2,4-trichlorobenzène. On les a tout d'abord dissous à chaud (4 h 00 à 150°C), puis on les a injectés à 150°C avec un débit de 1 $ml.min^{-1}$ dans un chromatographe " Waters Alliance GPCV 2000 " équipé de trois colonnes " Styragel " (2 colonnes " HT6E " et 1 colonne " HT2 "). On a effectué la détection à l'aide d'un réfractomètre " Waters ". On a déterminé les masses molaires par calibration relative en utilisant des étalons polystyrène certifiés par " Polymer Laboratories ".

*Détermination des fractions molaires*

On se reportera à l'article « Investigation of ethylene/butadiene copolymers microstructure by $^{1}H$ and $^{13}C$ NMR, Llauro M. F., Monnet C., Barbotin F., Monteil V., Spitz R., Boisson C., Macromolecules 2001,34, 6304-6311 », pour une description détaillée des techniques de RMN'H et de $RMN^{13}C$ qui ont été précisément utilisées dans la présente demande pour déterminer les fractions molaires des unités éthylène, unités diéniques conjuguées et des éventuelles unités *trans*-1,2 cyclohexane.

*Détermination de la cristallinité*

La mesure de cristallinité se fait par comparaison de l'enthalpie de fusion observée dans le cas des EBR. Ce phénomène endothermique est observé lors de l'analyse du thermogramme de la mesure DSC (Differential Scanning Calorimetry). La mesure se fait par balayage aller/retour de -150°C à 200°C sous atmosphère inerte (hélium) avec une rampe de 20°C/min.

Le signal correspondant au phénomène endothermique (fusion) est intégré et le taux de cristallinité est le rapport entre l'enthalpie mesurée et celle du polyéthylène parfaitement cristallin (290J/g).

%Cristallinité = (Enthalpie mesurée en J/g) / (enthalpie théorique d'un polyéthylène 100% cristallin en J/g).

*Détermination de la température de transition vitreuse*

La température de transition vitreuse, Tg, est mesurée dans la présente demande par la technique DSC (Differential Scanning Calorimetry) sur un appareil de dénomination « Setaram DSC 131 ». Le programme de température utilisé correspond à une montée en température de-120°C à 150°C à la vitesse de 10°C/min. On pourra se référer à la méthode décrite dans la demande WO 2007/054224 (page 11).

III-2 Préparation des compositions

On procède pour les essais qui suivent de la manière suivante : on introduit dans un mélangeur à palettes (taux de remplissage final : environ 70% en volume), dont la température initiale de cuve est d'environ 90°C, successivement, l'élastomère, la charge renforçante, l'acrylate polyfonctionnel ainsi que les divers autres ingrédients à l'exception du système de réticulation. On conduit alors un travail thermomécanique (phase non-productive) en une étape, qui dure au total environ 3 à 4 min, jusqu'à atteindre une température maximale de « tombée » de 160°C.

On récupère le mélange ainsi obtenu, on le refroidit puis on incorpore le système de réticulation (peroxyde ou soufre selon le cas), sur un mélangeur (homo-finisseur) à 23°C ou 50°C respectivement, en mélangeant le tout (phase productive) dans un outil à cylindre pendant un temps approprié (par exemple entre 5 et 12 min).

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit extrudées sous la forme d'un profilé.

III-3 Essais de compositions de caoutchouc

Sept compositions de caoutchouc ont été préparées comme indiqué au point III-2 ci-dessus, trois conformes à l'invention (notées ci-après C1 à C3) et quatre non conformes (composition témoin notée ci-après T1 à T4). Leurs formulations (en pce) et leurs propriétés ont été résumées dans le tableau I ci-après.

La composition témoin T1 est une composition classiquement utilisée dans les bandes de roulement de pneumatique. Les compositions témoin T2 et T3 diffèrent de T1 par la nature de la matrice élastomérique et diffèrent des compositions conformes à la présente invention uniquement par la nature du système de réticulation. La composition témoin T4 diffère des compositions conformes à la présente invention uniquement par la nature de la matrice élastomérique.

Les résultats d'allongement rupture (AR%), contrainte rupture et tan(δ)max sont présentés en « base 100 » par rapport à la composition témoin T1. Pour les valeurs d'allongement rupture (AR%) et de contrainte rupture, plus la valeur est élevée, plus le résultat est amélioré. Par ailleurs, plus la valeur plus de tan(δ)max à 60°C base 100 est basse, plus la composition aura une hystérèse faible et donc une résistance au roulement améliorée.

Tableau I

| | **T1** | **T2** | **T3** | **T4** | **C1** | **C2** | **C3** |
|---|---|---|---|---|---|---|---|
| NR (1) | 75 | - | - | 75 | - | - | - |
| BR (2) | 25 | - | - | 25 | - | - | - |
| EBR (3) | - | 100 | 100 | - | 100 | 100 | 100 |
| N234 (4) | 52 | 52 | 40 | 45 | 45 | 37 | 30 |
| Soufre | 1 | 1 | 1 | - | - | - | - |
| CBS (5) | 1 | 1 | 1 | - | - | - | - |
| ZnO (6) | 2.5 | 2.5 | 2.5 | - | - | - | - |
| Acide stéarique (7) | 1.5 | 1.5 | 1.5 | - | - | - | - |
| 6PPD (8) | 2 | 2 | 2 | - | - | - | - |
| TMPTMA (9) | - | - | - | 10 | 10 | 10 | 10 |
| DICUP 10) | - | - | - | 1 | 1 | 1 | 1 |
| | | | | | | | |
| AR% | 100 | 140 | 143 | 114 | 114 | 143 | 169 |

(suite)

| | T1 | T2 | T3 | T4 | C1 | C2 | C3 |
|---|---|---|---|---|---|---|---|
| Contrainte rupture | 100 | 95 | 82 | 91 | 136 | 136 | 132 |
| Tan(δ) max 60°C | 100 | 120 | 100 | 95 | 75 | 60 | 55 |

(1) Caoutchouc naturel
(2) Polybutadiène (Nd) avec 0,7% de 1-2 ; 1,7% de trans 1-4 ; 98% de cis 1-4 (Tg = - 105°C) (« Buna CB24 » de la société Arlanxeo)
(3) Copolymère éthylène-butadiène à 80% molaire de motifs éthylénique préparé selon un procédé de polymérisation d'éthylène et de butadiène conforme à l'exemple 4-2 du brevet EP 1 954 705 B1 au nom des Demanderesses, le temps de polymérisation étant ajusté de manière à obtenir une masse molaire Mn = 153 000 g/mol avec un indice de polydispersité égal à 1.9
(4) Noir de carbone N234 (dénomination selon la norme ASTM D-1765)
(5) N-cyclohexyl-2-benzothiazyle sulfénamide (« Santocure CBS » de la société Flexsys)
(6) Oxyde de zinc (grade industriel - société Umicore)
(7) Stéarine (« Pristerene 4931 » de la société Uniqema)
(8) N-1,3-diméthylbutyl-N-phénylparaphénylènediamine (« Santoflex 6-PPD » de la société Flexsys)
(9) Triméthylolpropane triméthacrylate (« SR351 » de la société SARTOMER)
(10) Peroxyde de dicumyl (« Dicup » de la société Hercules)

Ces résultats montrent que les compositions conformes à la présente invention, présentant à la fois une matrice élastomérique à base d'un copolymère comprenant des unités éthylène et des unités diéniques conjuguées, et un système de réticulation à base d'un acrylate polyfonctionnel et de peroxyde, permettent d'améliorer la résistance au roulement ainsi que les propriétés de cohésion du matériau. Par ailleurs, il a été constaté que lorsque les compositions conformes à la présente invention comprennent une charge renforçante à un taux compris entre 25 et 40 pce, les performances en allongement rupture sont également améliorées.

III-4 Essais sur pneumatiques

Les compositions témoin T et conforme à l'invention P1, décrites dans le Tableau II ci-dessous sont utilisées dans cet essai comme bandes de roulement de pneumatiques de tourisme à carcasse radiale, de dimension 205/55 R16, conventionnellement fabriquées et en tous points identiques hormis la composition de caoutchouc constitutive de la bande de roulement.
La composition témoin T est une composition classiquement utilisée dans les bandes de roulement de pneumatique.
Les pneumatiques ont d'abord été testés sur machine pour la détermination de leur résistance au roulement (Tan(δ) retour 60°C) et de (G*10%) poussée en dérivé, puis montés sur véhicule pour la suite des tests.
On a soumis ensuite les pneumatiques à un roulage sur route, sur une BMW 320D 163CV CONFORT charge 4 passagers pour la détermination de la résistance à l'usure.
Les résultats de poussée en dérive, de performance usure et tan(δ) retour sont présentés en base 100 par rapport au pneumatique témoin T. Pour les valeurs de poussée en dérive et de performance usure, plus la valeur est élevée, plus le résultat est amélioré. Par ailleurs, plus la valeur plus de tan(δ)retour à 60°C base 100 est basse, plus la composition aura une hystérèse faible et donc une résistance au roulement améliorée.

Tableau II

| | T | P1 |
|---|---|---|
| NR (1) | 80 | |
| BR (2) | 20 | |
| EBR (3) | | 100 |
| N234 (4) | 54 | 37 |
| Soufre | 3 | |
| CBS (5) | 2 | |

(suite)

| | T | P1 |
|---|---|---|
| ZnO (6) | 2 | |
| Acide stéarique (7) | 1.1 | |
| 6PPD (8) | 1.1 | |
| TMPTMA (9) | | 7,5 |
| DICUP 10) | | 0,75 |
| | | |
| G*10% 60°C | 100 | 127 |
| Tan(δ) retour 60°C | 100 | 80 |
| Performance usure | 100 | 200 |
| (1) à (10) tels que définis pour le Tableau I | | |

Ces résultats montrent que les compositions conformes à la présente invention utilisées dans la bande de roulement de pneumatique permettent d'améliorer à la fois la poussée en dérive et donc le comportement du véhicule, la résistance au roulement, ainsi que les performances d'usure.

## Revendications

**1.** Pneumatique comprenant une composition de caoutchouc à base d'au moins :

- une matrice élastomérique comprenant majoritairement un copolymère statistique comprenant des unités éthylène et des unités diéniques conjuguées, la fraction molaire des unités éthylène dans le copolymère étant compris dans un domaine allant de 50% à 95%,
- un peroxyde, et
- un acrylate polyfonctionnel de formule (I)

$$[X]_p\,A \qquad (I)$$

dans laquelle :

◦ A représente un atome de carbone ou un groupement hydrocarboné en $C_1$-$C_{13}$, linéaire, ramifié ou cyclique,
◦ A comprenant p valences libres, p ayant une valeur allant de 2 à 4,
◦ [X]p correspond à un radical de formule (II) :

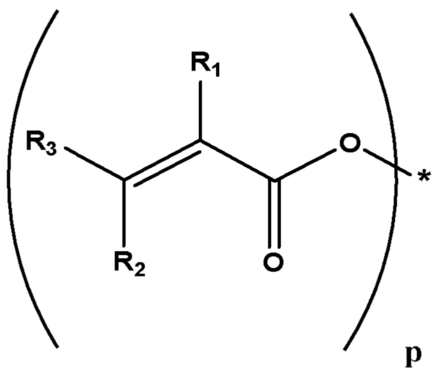

(II)

dans laquelle,

- $R_1$, $R_2$ et $R_3$ représentent indépendamment un atome d'hydrogène ou un groupe hydrocarboné en $C_1$-$C_8$ choisi dans le groupe constitué par les groupes alkyles linéaires, ramifiés ou cycliques, les groupes alkylaryles, les groupes aryles et les aralkyles, et éventuellement interrompus par un ou plusieurs hétéroatomes, $R_2$ et $R_3$ pouvant former ensemble un cycle non aromatique,
- (*) représente le point d'attachement du radical de formule (II) à A,

◦ étant entendu que les 2 à 4 radicaux X sont identiques ou différents,

les taux d'acrylate polyfonctionnel et de peroxyde étant tels que le rapport du taux de peroxyde sur le taux d'acrylate polyfonctionnel est supérieur ou égal à 0,08 ;
ladite composition comprenant de 5 à moins de 65 parties en poids pour cent parties en poids d'élastomère, pce, de charge renforçante ; le rapport du taux de charge sur le taux d'acrylate polyfonctionnel de formule (I) étant supérieur ou égal à 1,25.

**2.** Pneumatique selon la revendication 1, dans lequel A représente un groupement hydrocarboné en $C_1$-$C_{13}$ choisi dans le groupe constitué par les radicaux suivants :

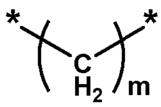 , 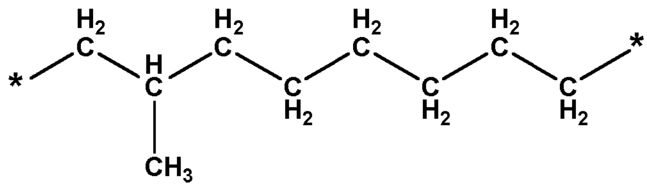 ,

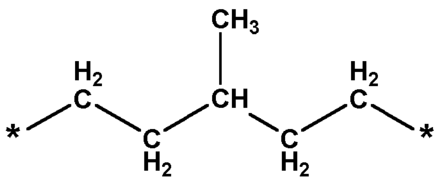 , 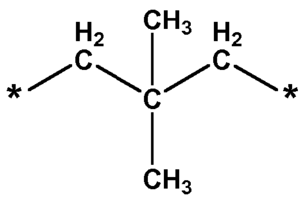 , 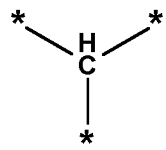 ,

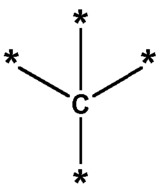 , 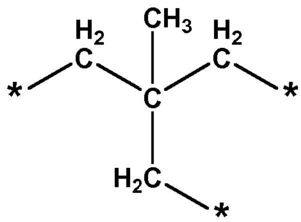 , 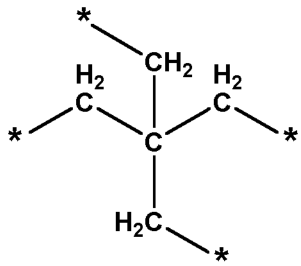

et

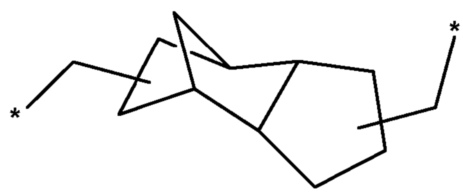

dans lesquels, m est un nombre entier allant de 1 à 13, de préférence de 6 à 10, et (*) représente le point d'attachement de A au radical de formule (II).

**3.** Pneumatique selon l'une quelconque des revendications 1 à 2, dans lequel les unités diéniques conjuguées sont

choisies dans le groupe constitué par les unités butadiènes, les unités isoprènes et les mélanges de ces unités diéniques conjuguées.

4. Pneumatique selon l'une quelconque des revendications 1 à 3, dans lequel le copolymère statistique comprenant des unités éthylène et des unités diéniques conjuguées présente une température de transition vitreuse Tg qui est inférieure à 25°C, de préférence comprise entre -45 °C et -20 °C.

5. Pneumatique selon l'une quelconque des revendications 1 à 4, dans lequel $R_2$ et $R_3$ représentent chacun un atome d'hydrogène.

6. Pneumatique selon l'une quelconque des revendications 1 à 5, dans lequel $R_1$ représente un groupe méthyle.

7. Pneumatique selon l'une quelconque des revendications 1 à 6, dans lequel la quantité d'acrylate polyfonctionnel dans la composition est comprise dans un domaine allant de 5 à 40 pce, de préférence de 5 à 30 pce.

8. Pneumatique selon l'une quelconque des revendications 1 à 7, dans lequel le peroxyde dans la composition est un peroxyde organique.

9. Pneumatique selon la revendication 8, dans lequel le peroxyde organique est choisis dans le groupe constitué par le peroxyde de dicumyle, les peroxydes d'aryle ou de diaryle, le peroxyde de diacétyle, le peroxyde de benzoyle, le peroxyde de dibenzoyle, le peroxyde de ditertbutyle, le peroxyde de tertbutylcumyle, le 2,5-bis (tertbutylperoxy)-2,5-diméthylhexane, le n-butyl-4,4'-di(tert-butylperoxy) valérate, le OO-(t-butyl)-O-(2-éthylhexyl) monoperoxycarbonate, le tertio-butyl peroxyisopropylcarbonate, le tertio-butyl peroxybenzoate, le tert-butyl peroxy-3,5,5-triméthylhexanoate, le 1,3(4)-bis(tert-butylperoxyisopropyl)benzene et leurs mélanges.

10. Pneumatique selon l'une quelconque des revendications 1 à 9, dans lequel la quantité de peroxyde dans la composition est inférieure ou égale à 3 pce.

11. Pneumatique selon l'une quelconque des revendications 1 à 10, dans lequel la charge renforçante comprend un noir de carbone, une charge inorganique renforçante, ou l'un de leurs mélanges.

12. Pneumatique selon la revendication 11, dans lequel la charge renforçante comprend majoritairement du noir du carbone.

13. Pneumatique selon l'une quelconque des revendications 1 à 12, dans lequel la composition ne contient pas de soufre moléculaire ou d'agent donneur de soufre en tant qu'agent de vulcanisation ou en contient moins de 0,5 pce.

14. Pneumatique selon l'une des revendications précédentes, dans lequel la composition définie dans l'une quelconque des revendications 1 à 13 est présente dans la bande de roulement et/ou au moins une couche interne dudit pneumatique.

15. Pneumatique selon la revendication 14, dans lequel la couche interne est choisie dans le groupe constitué par les nappes carcasse, les nappes sommet, les bourrages-tringle, les pieds sommets, les couches de découplage, les gommes de bordure, la sous-couche de bande de roulement et les combinaisons de ces couches internes.

**Patentansprüche**

1. Reifen, umfassend eine Kautschukzusammensetzung auf Basis von mindestens:

- einer elastomeren Matrix, die hauptsächlich ein statistisches Copolymer umfasst, das Ethyleneinheiten und konjugierte Dieneinheiten umfasst, wobei der molare Anteil der Ethyleneinheiten in dem Copolymer in einem Bereich von 50 % bis 95 % liegt,
- einem Peroxid und
- einem polyfunktionellen Acrylat der Formel (I)

$$[X]_p A \quad (I),$$

in der:

- ◦ A für ein Kohlenstoffatom oder eine lineare, verzweigte oder cyclische $C_1$-$C_{13}$-Kohlenwasserstoffgruppe steht,
- ◦ A p freie Valenzen umfasst, wobei p einen Wert im Bereich von 2 bis 4 hat,
- ◦ [X]p einem Rest der Formel (II) entspricht:

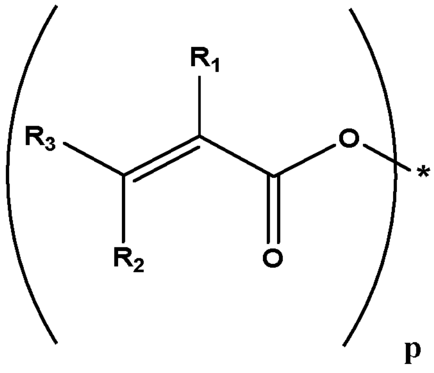

(II),

in der:

- ▪ $R_1$, $R_2$ und $R_3$ unabhängig für ein Wasserstoffatom oder eine Ci-$C_8$-Kohlenwasserstoffgruppe aus der Gruppe bestehend aus linearen, verzweigten oder cyclischen Alkylgruppen, Alkylarylgruppen, Arylgruppen und Aralkylgruppen, die gegebenenfalls durch ein oder mehrere Heteroatome unterbrochen sind, stehen, wobei $R_2$ und $R_3$ zusammen einen nichtaromatischen Ring bilden können,
- ▪ (*) für den Anbindungspunkt des Rests der Formel (II) an A steht,

- ◦ wobei es sich versteht, dass die 2 bis 4 Reste X gleich oder verschieden sind,

wobei die Gehalte an polyfunktionellem Acrylat und Peroxid so beschaffen sind, dass das Verhältnis des Gehalts an Peroxid zum Gehalt an polyfunktionellem Acrylat größer oder gleich 0,08 ist;
wobei die Zusammensetzung 5 bis weniger als 65 Gewichtsteile pro hundert Gewichtsteile Elastomer, phe, verstärkenden Füllstoff umfasst; wobei das Verhältnis des Gehalts an Füllstoff zum Gehalt an polyfunktionellem Acrylat der Formel (I) größer oder gleich 1,25 ist.

**2.** Reifen nach Anspruch 1, wobei A für eine $C_1$-$C_{13}$-Kohlenwasserstoffgruppe steht, die aus der aus den folgenden Resten bestehenden Gruppe ausgewählt ist:

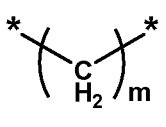
,
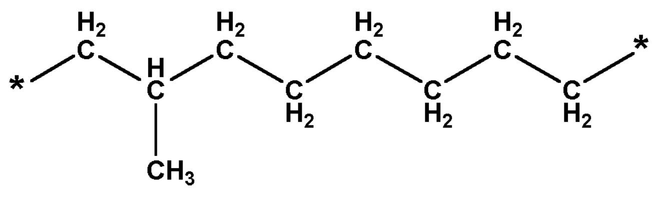
,
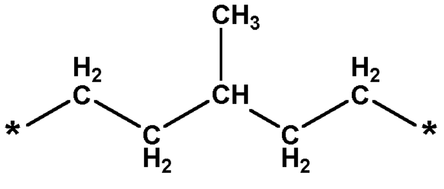
,
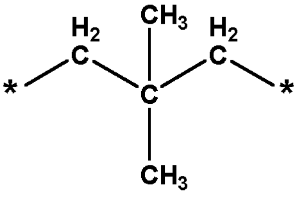
,
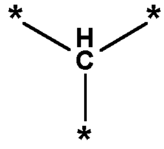
,

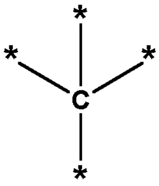,
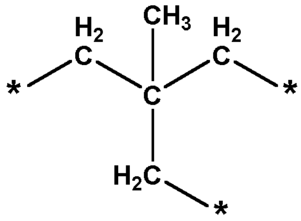,
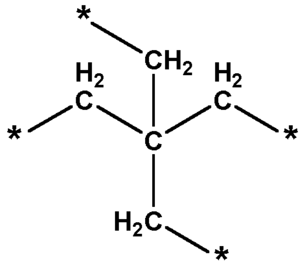

und

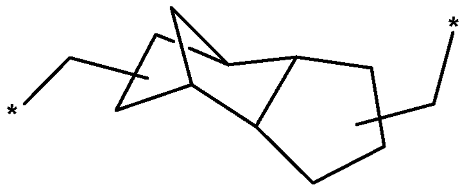

in denen m eine ganze Zahl im Bereich von 1 bis 13, vorzugsweise von 6 bis 10, ist und (*) für den Anbindungspunkt von A an den Rest der Formel (II) steht.

3. Reifen nach einem der Ansprüche 1 bis 2, wobei die konjugierten Dieneinheiten aus der Gruppe bestehend aus Butadieneinheiten, Isopreneinheiten und Mischungen dieser konjugierten Dieneinheiten ausgewählt sind.

4. Reifen nach einem der Ansprüche 1 bis 3, wobei das statistische Copolymer, das Ethyleneinheiten und konjugierte Dieneinheiten umfasst, eine Glasübergangstemperatur Tg von weniger als 25 °C, vorzugsweise zwischen -45 °C und -20 °C, aufweist.

5. Reifen nach einem der Ansprüche 1 bis 4, wobei $R_2$ und $R_3$ jeweils für ein Wasserstoffatom stehen.

6. Reifen nach einem der Ansprüche 1 bis 5, wobei $R_1$ für eine Methylgruppe steht.

7. Reifen nach einem der Ansprüche 1 bis 6, wobei die Menge an polyfunktionellem Acrylat in der Zusammensetzung in einem Bereich von 5 bis 40 phe, vorzugsweise von 5 bis 30 phe, liegt.

8. Reifen nach einem der Ansprüche 1 bis 7, wobei es sich bei dem Peroxid in der Zusammensetzung um ein organisches Peroxid handelt.

9. Reifen nach Anspruch 8, wobei das organische Peroxid aus der Gruppe bestehend aus Dicumylperoxid, Aryl- oder Diarylperoxiden, Diacetylperoxid, Benzoylperoxid, Dibenzoylperoxid, Di(tert-butyl)peroxid, tert-Butylcumylperoxid, 2,5-Bis(tert-butylperoxy)-2,5-dimethylhexan, n-Butyl-4,4'-di(tert-butylperoxy)valerat, OO-(t-Butyl)-O-(2-ethylhexyl)monoperoxycarbonat, tert-Butylperoxyisopropylcarbonat, tert-Butylperoxybenzoat, tert-Butylperoxy-3,5,5-trimethylhexanoat, 1,3(4)-Bis(tert-butylperoxyisopropyl)benzol und Mischungen davon ausgewählt ist.

10. Reifen nach einem der Ansprüche 1 bis 9, wobei die Menge an Peroxid in der Zusammensetzung kleiner oder gleich 3 phe ist.

11. Reifen nach einem der Ansprüche 1 bis 10, wobei der verstärkende Füllstoff einen Ruß, einen verstärkenden anorganischen Füllstoff oder eine Mischung davon umfasst.

12. Reifen nach Anspruch 11, wobei der verstärkende Füllstoff hauptsächlich Ruß umfasst.

13. Reifen nach einem der Ansprüche 1 bis 12, wobei die Zusammensetzung keinen molekularen Schwefel oder Schwefeldonor als Vulkanisationsmittel enthält oder davon weniger als 0,5 phe enthält.

**14.** Reifen nach einem der vorhergehenden Ansprüche, wobei die in einem der Ansprüche 1 bis 13 definierte Zusammensetzung in der Lauffläche und/oder mindestens einer Innenschicht des Reifens vorliegt.

**15.** Reifen nach Anspruch 14, wobei die Innenschicht aus der Gruppe bestehend aus Karkasslagen, Zwischenbauten, Kernreitern, Scheitelfüßen, Entkopplungsschichten, Randgummis, der Unterschicht der Lauffläche und Kombinationen dieser Innenschichten ausgewählt ist.

## Claims

**1.** Tire comprising a rubber composition based on at least:

- an elastomeric matrix comprising predominantly a random copolymer comprising ethylene units and conjugated diene units, the mole fraction of the ethylene units in the copolymer being within a range extending from 50% to 95%,
- a peroxide, and
- a polyfunctional acrylate of formula (I)

$$[X]_p\ A \qquad \text{(I)}$$

in which:

◦ A represents a carbon atom or a linear, branched or cyclic $C_1$-$C_{13}$ hydrocarbon-based group,
◦ A comprising p free valences, p having a value ranging from 2 to 4,
◦ [X]p corresponds to a radical of formula (II):

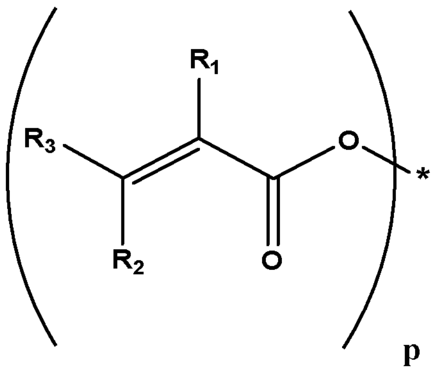

(II)

in which:

▪ $R_1$, $R_2$ and $R_3$ independently represent a hydrogen atom or a $C_1$-$C_8$ hydrocarbon-based group selected from the group consisting of linear, branched or cyclic alkyl groups, alkylaryl groups, aryl groups and aralkyls, and which are optionally interrupted by one or more heteroatoms, it being possible for $R_2$ and $R_3$ together to form a non-aromatic ring,
▪ (*) represents the point of attachment of the radical of formula (II) to A,

◦ it being understood that the 2 to 4 X radicals are identical or different, the contents of polyfunctional acrylate and of peroxide being such that the ratio of the peroxide content to the polyfunctional acrylate content is greater than or equal to 0.08; said composition comprising from 5 to less than 65 parts by weight per hundred parts by weight of elastomer, phr, of reinforcing filler; the ratio of the filler content to the content of polyfunctional acrylate of formula (I) being greater than or equal to 1.25.

**2.** Tire according to Claim 1, wherein A represents a $C_1$-$C_{13}$ hydrocarbon-based group selected from the group consisting of the following radicals:

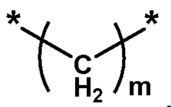, 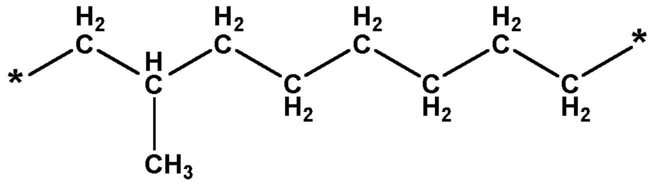,

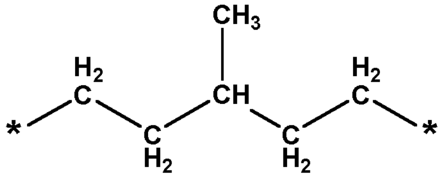, 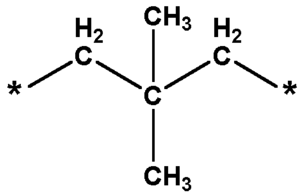, 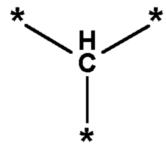,

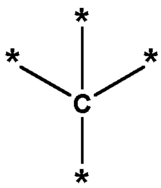, 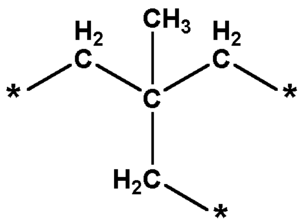, 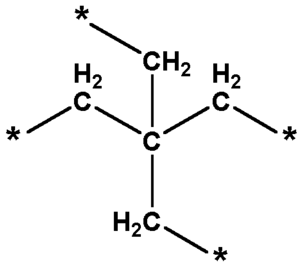

and

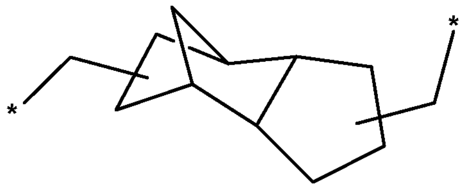

in which m is an integer ranging from 1 to 13, preferably from 6 to 10, and (*) represents the point of attachment of A to the radical of formula (II).

3. Tire according to any one of Claims 1 to 2, wherein the conjugated diene units are selected from the group consisting of butadiene units, isoprene units and mixtures of these conjugated diene units.

4. Tire according to any one of Claims 1 to 3, wherein the random copolymer comprising ethylene units and conjugated diene units has a glass transition temperature Tg which is less than 25°C, preferably of between -45°C and -20°C.

5. Tire according to any one of Claims 1 to 4, wherein $R_2$ and $R_3$ each represent a hydrogen atom.

6. Tire according to any one of Claims 1 to 5, wherein $R_1$ represents a methyl group.

7. Tire according to any one of Claims 1 to 6, wherein the amount of polyfunctional acrylate in the composition is within a range extending from 5 to 40 phr, preferably from 5 to 30 phr.

8. Tire according to any one of Claims 1 to 7, wherein the peroxide in the composition is an organic peroxide.

9. Tire according to Claim 8, wherein the organic peroxide is selected from the group consisting of dicumyl peroxide, aryl or diaryl peroxides, diacetyl peroxide, benzoyl peroxide, dibenzoyl peroxide, di(tert-butyl) peroxide, tert-butyl cumyl peroxide, 2,5-bis(tert-butylperoxy)-2,5-dimethylhexane, n-butyl-4,4'-di(tert-butylperoxy) valerate, OO-(t-butyl)-O-(2-ethylhexyl) monoperoxycarbonate, tert-butyl peroxyisopropylcarbonate, tert-butyl peroxybenzoate, tert-butyl peroxy-3,5,5-trimethylhexanoate, 1,3(4)-bis(tert-butylperoxyisopropyl)benzene, and mixtures thereof.

**10.** Tire according to any one of Claims 1 to 9, wherein the amount of peroxide in the composition is less than or equal to 3 phr.

**11.** Tire according to any one of Claims 1 to 10, wherein the reinforcing filler comprises a carbon black, a reinforcing inorganic filler or one of the mixtures thereof.

**12.** Tire according to Claim 11, wherein the reinforcing filler predominantly comprises carbon black.

**13.** Tire according to any one of Claims 1 to 12, wherein the composition does not contain molecular sulfur or a sulfur-donating agent as vulcanizing agent or contains less than 0.5 phr thereof.

**14.** Tire according to one of the preceding claims, wherein the composition defined in any one of Claims 1 to 13 is present in the tread and/or at least one internal layer of said tire.

**15.** Tire according to Claim 14, wherein the internal layer is selected from the group consisting of carcass plies, crown plies, bead-wire fillings, crown feet, decoupling layers, edge rubbers, the tread underlayer and the combinations of these internal layers.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2016102480 A
- WO 2016102483 A
- EP 1092731 A
- EP 1554321 A
- EP 1656400 A
- EP 1829901 A
- EP 1954705 A
- EP 1957506 A
- FR 1562573
- FR 1562575
- WO 9736724 A
- WO 9916600 A
- WO 2006069792 A
- WO 2006069793 A
- WO 2008003434 A
- WO 2008003435 A
- WO 03016387 A
- US 6610261 B
- US 6747087 B
- WO 02083782 A
- WO 0230939 A
- WO 0231041 A
- WO 2007061550 A
- WO 2006125532 A
- WO 2006125533 A
- WO 2006125534 A
- US 6849754 B
- WO 9909036 A
- WO 2006023815 A
- WO 2007098080 A
- WO 2010072685 A
- WO 2008055986 A
- EP 0501227 A
- EP 0735088 A
- EP 0810258 A
- WO 0005300 A
- WO 0005301 A
- WO 2007054224 A
- EP 1954705 B1


### Littérature non-brevet citée dans la description


- *The Journal of the American Chemical Society,* Février 1938, vol. 60, 309
- **LLAURO M. F. ; MONNET C. ; BARBOTIN F. ; MONTEIL V. ; SPITZ R. ; BOISSON C.** *Macromolecules,* 2001, vol. 34, 6304-6311